# EUROPÄISCHE PATENTSCHRIFT

(11) **EP 1 870 200 B1**
(45) Veröffentlichungstag und Bekanntmachung des Hinweises auf die Patenterteilung: **12.08.2009**
(21) Anmeldenummer: 07011589.4
(22) Anmeldetag: 13.06.2007
(51) Int. Cl.: B23Q 3/155, B23Q 3/157

(54) **Verfahren und Vorrichtung zum Bearbeiten eines Werkstücks, insbesondere zum spanabhebenden Bearbeiten eines metallischen Werkstücks**
Method and device for machining a workpiece, in particular for machining a metal workpiece
Procédé et dispositif destinés au traitement dýune pièce à usiner, en particulier pour le traitement par enlèvement dýune pièce à usiner métallique

(30) Priorität: 19.06.2006 DE 102006028970
(43) Veröffentlichungstag der Anmeldung: 26.12.2007
(73) Patentinhaber: STAMA MASCHINENFABRIK GMBH, D-73278 Schlierbach (DE)
(72) Erfinder: Feinauer, Achim, Dr., 73033 Göppingen (DE); Frommer, Karl, 73278 Schlierbach (DE)
(74) Vertreter: Duhme, Torsten

(56) Entgegenhaltungen:
- DE-A1- 2 106 440
- DE-A1- 19 860 709
- DE-C1- 4 311 469
- GB-A- 1 193 068
- GB-A- 1 251 064

## Beschreibung

Die vorliegende Erfindung betrifft ein Verfahren zum Bearbeiten eines Werkstücks, insbesondere zum spanabhebenden Bearbeiten eines metallischen Werkstücks, mit den Schritten:
- Bereitstellen einer Werkzeugmaschine mit einer Werkzeugaufnahme zur Aufnahme eines Bearbeitungswerkzeugs,
- Bereitstellen eines Werkzeugmagazins mit einer Vielzahl von Lagerstellen, die mit einer Vielzahl von Bearbeitungswerkzeugen in einer ersten räumlichen Abfolge zueinander bestückt sind, und
- Bearbeiten des Werkstücks mit einer definierten zeitlichen Abfolge von Bearbeitungswerkzeugen, wobei im Lauf der zeitlichen Abfolge jeweils ein in der Werkzeugaufnahme eingespanntes vorheriges Bearbeitungswerkzeug durch ein nachfolgendes Bearbeitungswerkzeug aus dem Werkzeugmagazin ersetzt wird,
wobei das vorherige Bearbeitungswerkzeug an einer definierten Lagerstelle im Werkzeugmagazin abgelegt wird, und wobei die bisherigen Bearbeitungswerkzeuge beim Zurücklegen in das Werkzeugmagazin in einer zweiten räumlichen Abfolge auf die Lagerstellen verteilt werden, die verschieden von der ersten räumlichen Abfolge ist.

Die Erfindung betrifft außerdem eine Vorrichtung zum Bearbeiten eines Werkstücks, insbesondere zum spanabhebenden Bearbeiten eines metallischen Werkstücks, mit einer Werkzeugaufnahme zur Aufnahme eines Bearbeitungswerkzeugs, und mit einem Werkzeugmagazin mit einer Vielzahl von Lagerstellen, die mit einer Vielzahl von Bearbeitungswerkzeugen in einer ersten räumlichen Abfolge zueinander bestückbar sind, ferner mit einer Steuerung, die dazu ausgebildet ist, die Bearbeitung eines Werkstücks mit einer definierten zeitlichen Abfolge von Bearbeitungswerkzeugen aus dem Werkzeugmagazin zu steuern, wobei im Lauf der zeitlichen Abfolge jeweils ein in der Spindel eingespanntes vorheriges Bearbeitungswerkzeug durch ein nachfolgendes Bearbeitungswerkzeug aus dem Werkzeugmagazin ersetzt wird, wobei das .. vorherige Bearbeitungswerkzeug an einer definierten Lagerstelle im Werkzeugmagazin abgelegt wird, und wobei die Steuerung dazu ausgebildet ist, die vorherigen Bearbeitungswerkzeuge beim Zurücklegen in das Werkzeugmagazin in einer zweiten räumlichen Abfolge auf die Lagerstellen zu verteilen, die verschieden von der ersten räumlichen Abfolge ist.

Ein solches Verfahren und eine solche Vorrichtung sind aus der DE 21 06 440 A bekannt.

Bei dem bekannten Verfahren wird ein Werkzeugmagazin mit Zwischengreifer verwendet, so dass das vorherige Bearbeitungswerkzeug immer dort abgelegt wird, wo das als nächstes einzusetzende Bearbeitungswerkzeug gerade entnommen wurde und somit einen freien Speicherplatz hinterlassen hat. Dadurch ändert sich nach jedem Bearbeitungsdurchgang die Abfolge der Bearbeitungswerkzeuge in dem Werkzeugmagazin, weshalb ein Informationsspeicher vorgesehen ist, der die jeweils neue Abfolge der Bearbeitungswerkzeuge abbildet.

Die DE 43 11 469 C1 beschreibt eine Werkzeugmaschine mit einem Werkzeugmagazin, das als Kettenmagazin mit einer umlaufenden Kette ausgebildet ist. An der Kette sind Lagerstellen für die Bearbeitungswerkzeuge angeordnet. Das Aufnehmen und Ablegen eines Bearbeitungswerkzeugs erfolgt an einer definierten Umfangsposition der Kette. An einer anderen Umfangsposition ist ein Greifer angeordnet, der in der Lage ist, ein Bearbeitungswerkzeug aus einer Lagerstelle zu entnehmen bzw. in eine Lagerstelle abzulegen. Mit Hilfe dieses Greifers wird im Betrieb der Werkzeugmaschine jeweils diejenige Lagerstelle frei gemacht, die direkt benachbart zu einer Lagerstelle mit dem nächstfolgenden Werkzeug in der Abfolge der Bearbeitungswerkzeuge liegt. Auf diese Weise kann der Werkzeugwechsel sehr schnell durchgeführt werden, weil das vorherige Bearbeitungswerkzeug direkt neben das nachfolgende Bearbeitungswerkzeug abgelegt wird.

Das Verfahren und die Vorrichtung aus DE 43 11 469 C1 haben sich in der Praxis gut bewährt. Sie ermöglichen schnelle Werkzeugwechsel und damit kurze Span-zu-Span-Zeiten, weil das Freimachen der benachbarten Lagerstelle des nachfolgenden Werkzeugs zeitgleich zur Bearbeitung des Werkstücks mit dem vorherigen Werkzeug erfolgt. Die bekannte Vorrichtung ist zudem einfach und kostengünstig aufgebaut, und sie bietet dem Anwender die Möglichkeit, das Werkzeugmagazin "chaotisch" zu bestücken, d.h. der Anwender muss die Bestückung des Werkzeugmagazins nicht auf die Abfolge bei der Bearbeitung des Werkstücks abstimmen.

Allerdings hat sich in der praktischen Anwendung dieses bekannten Verfahrens und der bekannten Vorrichtung gezeigt, dass die Bearbeitungswerkzeuge in dem Werkzeugmagazin relativ häufig umgelagert werden müssen, was zu einem erhöhten Verschleiß der umlaufenden Kette und der einzelnen Halter für die Bearbeitungswerkzeuge führen kann.

Es gibt darüber hinaus eine Vielzahl von weiteren Konzepten für die Anordnung und den Betrieb von Werkzeugmagazinen an Werkzeugmaschinen. Beispielhaft sei hierzu auf DE 38 31 869 A1, DE 35 21 009 A1, DE 43 04 361 A1 oder DE 103 44 642 A1 verwiesen. Trotz dieser zahlreichen Konzepte gibt es immer noch einen Bedarf nach einfachen, kostengünstigen und schnellen Lösungen für die Bereitstellung und Zuführung von Bearbeitungswerkzeugen an einer Werkzeugmaschine.

Die DE 198 60 709 A1 beschreibt ein Verfahren zum Werkzeugwechsel, bei dem zwei Magazine benötigt werden, um eine Bereitstellung von Werkzeugen in der richtigen Reihenfolge zu ermöglichen.

Die GB 1 193 068 A1 beschreibt ein Verfahren zum Sortieren von Bearbeitungswerkzeugen, das sicherstellt, dass neben dem als nächstes zu verwendenden Bearbeitungswerkzeug immer ein freier Speicherplatz vorhanden ist.

Ein entsprechendes Verfahren beschreibt auch die GB 1 251 064 A1.

Angesichts dessen ist es eine Aufgabe der vorliegenden Erfindung, ein Verfahren und eine Vorrichtung der eingangs genannten Art anzugeben, die kurze Span-zu-Span-Zeiten auf konstruktiv einfache und kostengünstige Weise und mit geringem Verschleiß ermöglichen.

Gemäß einem Aspekt der vorliegenden Erfindung wird diese Aufgabe durch ein Verfahren der eingangs genannten Art gelöst, bei dem die zweite räumliche Abfolge zumindest weitgehend der zeitlichen Abfolge entspricht.

Nach einem anderen Aspekt der Erfindung wird diese Aufgabe durch eine Vorrichtung der eingangs genannten Art gelöst, bei der die Steuerung dazu ausgebildet ist, die vorherigen Bearbeitungswerkzeuge beim Zurücklegen in das Werkzeugmagazin in einer zweiten räumlichen Abfolge auf die Lagerstellen zu verteilen, die zumindest weitgehend der zeitlichen Abfolge entspricht.

Nach dem neuen Verfahren und bei der neuen Vorrichtung wird ein vorheriges, bereits benutztes Bearbeitungswerkzeug an einer Lagerstelle abgelegt, deren Position innerhalb der räumlichen Abfolge der Lagerstellen zumindest weitgehend der Position des vorherigen Bearbeitungswerkzeugs innerhalb der zeitlichen Abfolge der Bearbeitungswerkzeuge entspricht. Dies erfolgt unabhängig davon, in welcher räumlichen Abfolge die Bearbeitungswerkzeuge zu Beginn bzw. vor dem Start des Bearbeitungsvorgangs auf die Lagerstellen verteilt sind. Die vorliegende Erfindung ermöglicht es einem Anwender daher, die Lagerstellen des Werkzeugmagazins "chaotisch", also in einer beliebigen räumlichen Abfolge zueinander zu bestücken. Dies ist für den Anwender sehr bequem und außerdem von Vorteil, wenn das Bearbeitungsprogramm auf der Werkzeugmaschine verändert wird, weil beispielsweise ein anderes Werkstück gefertigt werden soll. Da die vorliegende Erfindung die Möglichkeit bietet, mit einer "chaotischen" Bestückung des Werkzeugmagazins zu starten, kann der neue Bearbeitungsvorgang an den vorherigen Bearbeitungsvorgang anschließen, ohne dass das Werkzeugmagazin zuvor umsortiert werden muss. (Es versteht sich natürlich, dass die benötigten Bearbeitungswerkzeuge für den neuen Bearbeitungsprozess in dem Werkzeugmagazin vorhanden sein müssen oder ergänzt werden müssen. Es ist bei der neuen Vorrichtung und dem neuen Verfahrens allerdings nicht erforderlich, die Bestückung des Werkzeugmagazins vor Aufnahme des neuen Bearbeitungsvorgangs zu optimieren, wenngleich dies natürlich als ergänzende Maßnahme möglich ist.)

Das neue Verfahren und die neue Vorrichtung führen bei der erstmaligen Bearbeitung eines Werkstücks nach einem neuen Bearbeitungsprogramm eine automatische Sortierung der Bearbeitungswerkzeuge in dem Werkzeugmagazin durch, indem ein (zuvor beliebig bzw. "chaotisch" gelagertes) Bearbeitungswerkzeug beim Zurücklegen in das Werkzeugmagazin an einer Lagerstelle abgelegt wird, die der Position des entsprechenden Bearbeitungswerkzeugs im zeitlichen Bearbeitungsablauf entspricht. Beim ersten Bearbeitungswerkzeug eines neuen Programms kann die Lagerstelle im Prinzip frei gewählt werden. Bevorzugt wird aber stets eine definierte erste Lagerstelle für das erste Bearbeitungswerkzeug verwendet.

Aufgrund der Erfindung liegen die Bearbeitungswerkzeuge nach dem erstmaligen Durchlauf eines Bearbeitungsvorgangs in einer räumlichen Abfolge in dem Werkzeugmagazin, die der zeitlichen Abfolge der Bearbeitungswerkzeuge entspricht. Daher kann die Werkzeugmaschine die Bearbeitungswerkzeuge spätestens ab dem zweiten Bearbeitungsprozess sehr schnell aus dem Werkzeugmagazin entnehmen, da die Bearbeitungswerkzeuge in dem Magazin nach der benötigten Abfolge geordnet sind. Ein Werkzeugwechsel ist daher mit geringsten Verfahrwegen möglich und kann dementsprechend schnell ausgeführt werden. Zudem müssen die Bearbeitungswerkzeuge nach dem erstmaligen Durchlauf des Bearbeitungsprozesses kaum noch umsortiert werden. Die Anzahl der Zugriffe auf die Lagerstellen des Werkzeugmagazins und die Anzahl der gegebenenfalls erforderlichen Kettenvorschübe wird reduziert und folglich reduziert sich auch der Verschleiß.

Andererseits nutzen die neue Vorrichtung und das neue Verfahren die Vorteile, die sich aus dem eingangs beschriebenen Grundkonzept ergeben. Dies sind vor allem ein konstruktiv einfacher und kostengünstiger Aufbau möglich.

Ein weiterer Vorteil der neuen Vorrichtung und des neuen Verfahrens ergibt sich, wenn Bearbeitungswerkzeuge im Verlauf eines längeren Produktionsprozesses ausgetauscht werden sollen, beispielsweise um eine gleichmäßig hohe Schnittqualität zu gewährleisten. Ein Ersatzwerkzeug (Schwesterwerkzeug) kann bei der neuen Vorrichtung und dem neuen Verfahren an einer beliebigen Lagerstelle im Werkzeugmagazin platziert werden, da es nach seiner erstmaligen Verwendung automatisch an der "richtigen" Stelle in der Abfolge der benötigten Bearbeitungswerkzeuge einsortiert wird. Außerdem findet bei einem Programmwechsel automatisch eine Umsortierung statt, so dass die (zweite) räumliche Abfolge der Bearbeitungswerkzeuge spätestens nach dem erstmaligen Durchlauf eines neuen Bearbeitungsprogramms wieder optimal an die zeitliche Abfolge der Bearbeitungswerkzeuge angepasst ist.

Die oben genannte Aufgabe ist daher vollständig gelöst.

Der Vollständigkeit halber sei allerdings an dieser Stelle darauf hingewiesen, dass es im Rahmen der vorliegenden Erfindung nicht zwingend erforderlich ist, dass die zweite räumliche Abfolge der Bearbeitungswerkzeuge exakt der zeitlichen Abfolge der Bearbeitungswerkzeuge entspricht. Beispielsweise kann ein Bearbeitungswerkzeug, das im Ablauf des Bearbeitungsvorgangs sehr häufig benötigt wird, an einer fest definierten Lagerstelle gelagert werden (Festplatzcodierung), die danach ausgewählt sein kann, dass die erforderlichen Bewegungen des Werkzeugmagazins minimiert werden. Ein solches "fest codiertes" Bearbeitungswerkzeug würde somit aus der an sich vorgesehenen Abfolge herausfallen.

Des Weiteren kann es sein, dass ein "übergroßes" Bearbeitungswerkzeug aufgrund seiner Abmessungen nur an bestimmten Lagerstellen innerhalb des Werkzeugmagazins abgelegt werden kann. Auch in diesem Fall würde das übergroße Bearbeitungswerkzeug aus der an sich vorgesehenen Abfolge herausfallen. Angesichts dieser und anderer Sonderfälle genügt es im Rahmen der vorliegenden Erfindung, wenn die zweite räumliche Abfolge der Bearbeitungswerkzeuge der zeitlichen Abfolge zumindest annähernd entspricht. Die Fachleute auf diesem Gebiet werden allerdings erkennen, dass die Vorteile der Erfindung umso deutlicher hervortreten, je höher die Übereinstimmung zwischen der zweiten räumlichen Abfolge und der zeitlichen Abfolge der Bearbeitungswerkzeuge ist.

In einer Ausgestaltung der Erfindung beginnt die Bearbeitung des Werkstücks mit einem ersten Bearbeitungswerkzeug, wobei das erste Bearbeitungswerkzeug nach der Bearbeitung an einer definierten ersten Lagerstelle im Werkzeugmagazin abgelegt wird, wobei jedes nachfolgende Bearbeitungswerkzeug an einer definierten nachfolgenden Lagerstelle abgelegt wird, und wobei die definierten nachfolgenden Lagerstellen in einer auf- oder absteigenden Ordnung an die erste Lagerstelle angereiht sind.

Diese Ausgestaltung ist eine einfache und kostengünstige Möglichkeit, um das erfindungsgemäße Verfahren praktisch zu realisieren. Während bei dem Verfahren und der Vorrichtung aus der eingangs genannten DE 43 11 469 C1 eine Lagerstelle für ein vorheriges Werkzeug jeweils in Abhängigkeit von der Lagerstelle des nachfolgenden Werkzeugs ausgesucht wird, bestimmt nach dieser Ausgestaltung der Erfindung jeweils das vor-vorherige Bearbeitungswerkzeug die Lagerstelle für das abzulegende, vorherige Bearbeitungswerkzeug.

In einer weiteren Ausgestaltung wird die Lagerstelle für das vorherige Bearbeitungswerkzeug, sofern erforderlich, mit einem automatisierten Greifer freigemacht, während das Werkstück mit dem vorherigen Bearbeitungswerkzeug bearbeitet wird.

In dieser Ausgestaltung der Erfindung wird die Lagerstelle, die zum Ablegen des aktuell benutzten Bearbeitungswerkzeugs benötigt wird, zeitgleich zum aktuellen Bearbeitungsvorgang freigemacht, sofern dies erforderlich ist. Dadurch werden Verzögerungszeiten auch schon beim Ablegen des ersten Bearbeitungswerkzeugs minimiert.

In einer weiteren Ausgestaltung legt die Spindel das vorherige Bearbeitungswerkzeug direkt an seiner Lagerstelle ab. Des Weiteren ist es bevorzugt, wenn die Spindel auch das nachfolgende Bearbeitungswerkzeug direkt aus seiner Lagerstelle entnimmt.

Nach diesen beiden Ausgestaltungen erfolgt der Werkzeugwechsel im sogenannten Pick-up-Verfahren, d.h. die Spindel greift direkt auf die Bearbeitungswerkzeuge in dem Werkzeugmagazin zu. Alternativ hierzu kann die vorliegende Erfindung in anderen Ausgestaltungen auch mit Greifern realisiert werden, die die Bearbeitungswerkzeuge zwischen dem Werkzeugmagazin und der Werkzeugaufnahme transferieren. Im letztgenannten Fall ist es von Vorteil, wenn der entsprechende Greifer auch dazu verwendet wird, die Lagerstelle für das vorherige Bearbeitungswerkzeug frei zu machen.

Das Pick-up-Verfahren ist im Zusammenhang mit der vorliegenden Erfindung besonders vorteilhaft, wenn eine Spindel als Werkzeugaufnahme dient, da eine Spindel in der Regel sehr schnelle Antriebe besitzt und daher sehr schnell auf die in "richtiger" zeitliche Abfolge sortierten Bearbeitungswerkzeuge zugreifen kann.

In einer anderen Ausgestaltung legt die Spindel das vorherige Bearbeitungswerkzeug direkt an seiner Lagerstelle ab, während das nachfolgende Bearbeitungswerkzeug mit einem separaten Greifer aus seiner Lagerstelle entnommen wird. Vorteilhaft ist es in diesem Fall, wenn der separate Greifer mit dem Spindelstock gekoppelt ist, so dass das Einsetzen des nachfolgenden Bearbeitungswerkzeuges in die Spindel erfolgen kann, während die Spindel (zusammen mit dem separaten Greifer) in die Bearbeitungsposition zurückkehrt. Mit dieser Ausgestaltung lassen sich besonders kurze Span-zu-Span-Zeiten realisieren.

In einer weiteren Ausgestaltung weist die Werkzeugmaschine zumindest zwei Arbeitsräume auf, in denen Werkstücke bearbeitet werden, wobei für jeden Arbeitsraum ein eigener Satz an Bearbeitungswerkzeugen in dem Werkzeugmagazin bereitgestellt wird.

Diese Ausgestaltung ist vorteilhaft, wenn die Zuführung und die Entnahme der Werkstücke zeitaufwendig ist, da in dem einen Arbeitsraum bereits ein Werkstück bearbeitet werden kann, während der andere Arbeitsraum mit einem neuen Werkstück bestückt wird. Die Bereitstellung von zwei separaten Sätzen an Bearbeitungswerkzeugen ermöglicht für jeden Bearbeitungsvorgang kurze Werkzeugwechsel und damit eine sehr effiziente Produktion.

In einer weiteren Ausgestaltung wird ein erster Satz von Bearbeitungswerkzeugen beim Zurücklegen in das Werkzeugmagazin in der zweiten räumlichen Abfolge auf die Lagerstellen verteilt, und ein zweiter Satz von Bearbeitungswerkzeugen wird beim Zurücklegen in das Werkzeugmagazin in einer dritten räumlichen Abfolge auf die Lagerstellen verteilt, wobei die zweite und die dritte Abfolge die Lagerstellen gegenläufig belegen.

In dieser Ausgestaltung werden die zwei Sätze an Bearbeitungswerkzeugen jeweils im Sinne der vorliegenden Erfindung sortiert. Eine gegenläufige Belegung der Lagerstellen besitzt dabei den Vorteil, dass die vorhandenen Lagerstellen mit einem geringen Verwaltungsaufwand auf die beiden Werkzeugsätze verteilt werden.

Dies gilt insbesondere, wenn die zweite und die dritte Abfolge an benachbarten Lagerstellen beginnen, da die Lagerstellen dann von einem "gemeinsamen" Punkt aus in entgegengesetzter Richtung befüllt werden und die Werkzeugsätze nicht miteinander "kollidieren"

Alternativ hierzu sind die zweite und die dritte räumliche Abfolge der Bearbeitungswerkzeuge bei einer anderen Ausgestaltung ineinander verschachtelt auf die Lagerstellen des Werkzeugmagazins verteilt. Diese Ausgestaltung reduziert die Vorschubbewegungen in dem Werkzeugmagazin, wenn in den zwei (oder mehr) Arbeitsräumen überlappend gearbeitet wird. Daher lassen sich die erforderlichen Magazinbewegungen weiter reduzieren.

In einer weiteren Ausgestaltung ist das Werkzeugmagazin ein Kettenmagazin mit einer umlaufenden Kette, an der die Lagerstellen angeordnet sind.

Kettenmagazine haben sich in der Praxis bewährt. Sie eignen sich zur Realisierung der vorliegenden Erfindung besonders gut, weil die Lagerstellen an einer umlaufenden Kette sehr einfach in aufsteigender oder absteigender Ordnung belegt werden können, und zwar auch dann, wenn zwei Sätze mit Bearbeitungswerkzeugen in gegenläufiger Richtung in dem Werkzeugmagazin abgelegt werden sollen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines ersten Ausführungsbeispiels der neuen Vorrichtung,
- Fig. 2: eine vereinfachte Darstellung des Werkzeugmagazins der Vorrichtung aus Fig. 1 mit einer anfänglichen Bestückung mit Bearbeitungswerkzeugen, und
- Fig. 3-9: das Werkzeugmagazin aus Fig. 2 mit einer wechselnden Belegung der Lagerstellen mit Bearbeitungswerkzeugen, wie sie sich nach einem Ausführungsbeispiel der vorliegenden Erfindung ergibt.

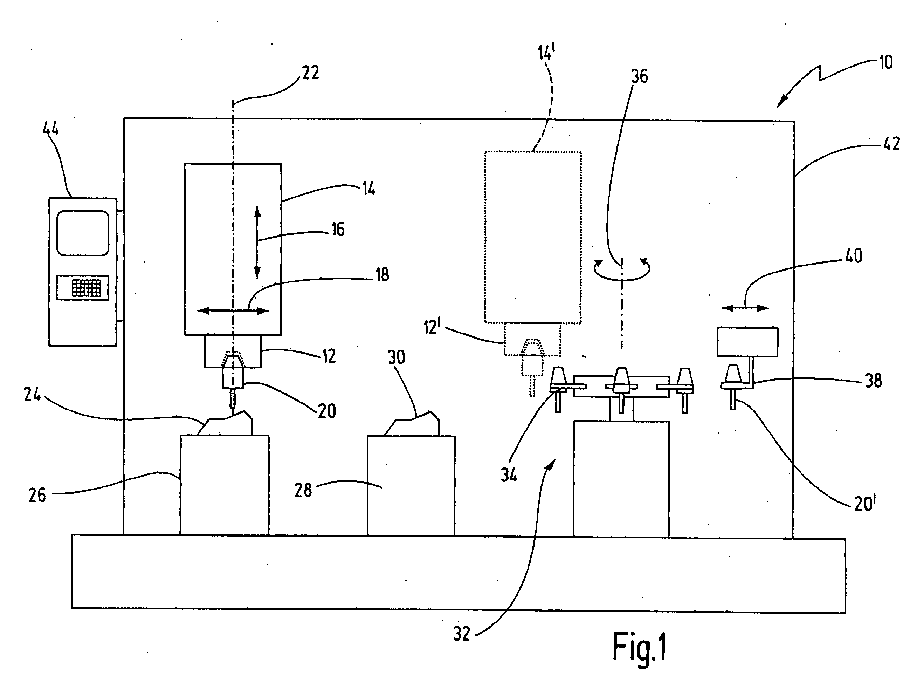

In Fig. 1 ist ein Ausführungsbeispiel der neuen Vorrichtung in seiner Gesamtheit mit der Bezugsziffer 10 bezeichnet.

Die Vorrichtung 10 ist hier eine Werkzeugmaschine zur spanabhebenden Bearbeitung von metallischen Werkstücken, insbesondere ein sogenanntes Bearbeitungszentrum, das Bearbeitungsvorgänge wie Fräsen, Bohren, Trennschleifen, Gewindeschneiden, etc. vollautomatisch ermöglicht. Die Vorrichtung 10 besitzt eine Spindel 12, die in einem Spindelstock 14 angeordnet ist. Der Spindelstock 14 ist hier in mehreren Raumrichtungen verfahrbar, was mit Pfeilen 16, 18 angedeutet ist. In bevorzugten Ausführungsbeispielen der Erfindung ist der Spindelstock an einem Fahrständer angeordnet, der eine Bewegung in drei zueinander senkrechten Raumrichtungen ermöglicht, die üblicherweise als X-, Y- und Z-Achse bezeichnet werden. Die Erfindung ist allerdings nicht auf solche Fahrständermaschinen beschränkt und kann beispielsweise auch bei Werkzeugmaschinen eingesetzt werden, bei denen die Arbeitsspindel zumindest teilweise feststehend ist, während das Werkstück bewegt wird. Des Weiteren kann die vorliegende Erfindung auch bei Werkzeugmaschinen mit horizontalen und/oder mehreren Arbeitsspindeln vorteilhaft eingesetzt werden.

Am unteren freien Ende der Spindel 12 befindet sich eine Werkzeugaufnahme, in der ein Bearbeitungswerkzeug 20 eingespannt ist. Wie bei Werkzeugmaschinen dieser Art üblich, wird das Bearbeitungswerkzeug mit Hilfe eines sogenannten Werkzeughalters in die Aufnahme der Spindel 12 eingespannt. Der Einfachheit halber wird in der vorliegenden Beschreibung allerdings nicht zwischen dem eigentlichen Bearbeitungswerkzeug, z.B. einem Fräskopf oder einem Gewindeschneider, und dem Werkzeughalter unterschieden. Der Begriff Bearbeitungswerkzeug beinhaltet beide Teile gleichermaßen, sofern die Werkzeugmaschine mit Werkzeughaltern arbeitet. Bei Werkzeugmaschinen, bei denen die Bearbeitungswerkzeuge direkt in die Werkzeugaufnahme der Arbeitsspindel eingespannt werden, ist natürlich nur das Bearbeitungswerkzeug als solches gemeint.

Das Bearbeitungswerkzeug 20 wird mit Hilfe der Spindel 12 um eine Spindelachse 22 gedreht, um eine Bearbeitung an einem Werkstück 24 durchzuführen. Das Werkstück 24 ist hier auf einem Werkstücktisch 26 aufgespannt. Alternativ hierzu könnte das Werkstück 24 auch in einer Werkstückspindel eingespannt sein, um zusätzlich auch eine Drehbearbeitung in gleicher Aufspannung zu ermöglichen. Darüber hinaus kann die vorliegende Erfindung grundsätzlich auch bei reinen Drehmaschinen eingesetzt werden.

Mit der Bezugsziffer 28 ist hier ein zweiter Werkstücktisch bezeichnet, auf dem ein zweites Werkstück 30 aufgespannt ist. Der Werkstücktisch 28 dient zur Bearbeitung des Werkstücks 30, während das Werkstück 24 von dem Werkstücktisch 26 entnommen wird, bzw. der Werkstücktisch 26 mit einem neuen Werkstück bestückt wird. Die Werkstücktische 26, 28 symbolisieren hier zwei Arbeitsräume, in denen Werkstücke 24, 30 wechselweise mit Hilfe der Arbeitsspindel 12 bearbeitet werden. In anderen Ausführungsbeispielen kann die vorliegende Erfindung auch bei Werkzeugmaschinen mit nur einem Arbeitsraum und/oder bei Werkzeugmaschinen mit mehreren Arbeitsspindeln eingesetzt werden.

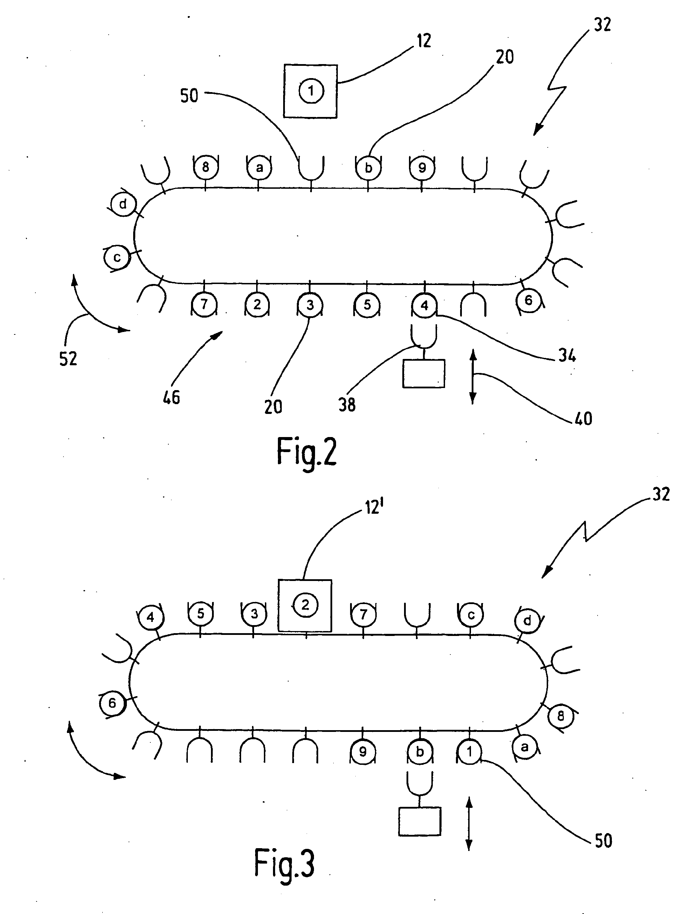

Mit der Bezugsziffer 32 ist ein Werkzeugmagazin bezeichnet, das eine Vielzahl von Lagerstellen 34 zur Aufnahme von Bearbeitungswerkzeugen (hier mit Werkzeughalter dargestellt) aufweist. Wie man aus den Fig. 2 bis 9 erkennen kann, ist das Werkzeugmagazin 32 hier als Kettenmagazin mit einer umlaufenden Kette realisiert. Die Lagerstellen 34 lassen sich mit Hilfe der umlaufenden Kette um eine Achse 36 verfahren, so dass die einzelnen Lagerstellen 34 wahlweise in eine geeignete Übergabeposition für einen Werkzeugwechsel gebracht werden können.

Mit der Bezugsziffer 38 ist ein Greifer bezeichnet, der an einer äußeren Umfangsposition der Kette angeordnet ist. Der Greifer 38 ist hier in Richtung eines Pfeils 40 verfahrbar und damit in der Lage, ein Bearbeitungswerkzeug 20' aus einer Lagerstelle 34 zu entnehmen bzw. in eine Lagerstelle 34 einzulegen. Darüber hinaus kann man mit dem Greifer 38 ein Bearbeitungswerkzeug 20' zwischenspeichern, um eine Umsortierung innerhalb des Werkzeugmagazins 32 durchzuführen.

Der Werkzeugwechsel erfolgt hier im Pick-up-Verfahren, d.h. die Spindel 12 kann in eine Übergabeposition verfahren werden (Bezugsziffer 12' bzw. 14'), an der die Spindel 12 ein Bearbeitungswerkzeug direkt aus einer Lagerstelle 34 entnehmen kann bzw. an einer Lagerstelle 34 ablegen kann. Alternativ hierzu könnte der Transfer der Bearbeitungswerkzeuge zwischen dem Werkzeugmagazin 32 und der Arbeitsspindel 12 auch mit Hilfe eines hier nicht dargestellten Greifers erfolgen. Insbesondere kann die Vorrichtung 10 so aufgebaut sein, dass der Greifer 38 zum Transfer der Bearbeitungswerkzeuge zwischen dem Werkzeugmagazin 32 und der Spindel 12 dient. Die in Fig. 1 dargestellte Anordnung mit einem im Wesentlichen ortsfest angeordneten Greifer 38 (abgesehen von der Beweglichkeit in Richtung des Pfeils 40) und einem Werkzeugwechsel nach dem Pick-up-Verfahren ist allerdings aus heutiger Sicht wegen ihres einfachen und kostengünstigen Aufbaus bevorzugt.

Bei der Bezugsziffer 42 ist eine Umhausung angedeutet, die die Arbeitsräume und die beweglichen Teile der Vorrichtung 10 umhaust. Die Umhausung 42 kann auch aus mehreren Teilen bestehen und/oder das Werkzeugmagazin 32 kann außerhalb der Umhausung 42 für die Arbeitsräume und die Spindel 12 angeordnet sein.

Mit der Bezugsziffer 44 ist eine Steuerung bezeichnet, die die Bewegungsabläufe der Vorrichtung 10 sowie die Zufuhr von Kühlmittel, Pressluft, etc. steuert. Hierzu wird in an sich bekannter Weise ein Bearbeitungsprogramm, das vom Anwender für einen bestimmten Produktionsprozess erstellt wird, in einen Speicher der Steuerung 44 geladen (hier nicht gesondert dargestellt). In einem Ausführungsbeispiel der Erfindung ist die Steuerung 44 dazu ausgebildet, die Ablage der Bearbeitungswerkzeuge in dem Werkzeugmagazin 32 nach dem neuen Verfahren durchzuführen.

Bei der nachfolgenden Beschreibung eines bevorzugten Ausführungsbeispiels des neuen Verfahrens bezeichnen gleiche Bezugszeichen dieselben Elemente wie zuvor. Zusätzlich sind hier zwei Sätze von Bearbeitungswerkzeugen dargestellt, wobei die Bearbeitungswerkzeuge eines ersten Satzes von 1 bis 9 durchnummeriert sind, während die Bearbeitungswerkzeuge eines zweiten Satzes mit a bis d bezeichnet sind. Beispielsweise dient der erste Werkzeugsatz mit den Werkzeugen 1 bis 9 zum Bearbeiten von Werkstücken 24 in dem ersten Arbeitsraum 26, während die Werkzeuge a bis d des zweiten Satzes zum Bearbeiten von Werkstücken 30 in dem zweiten Arbeitsraum 28 dienen.

Fig. 2 zeigt eine Situation zu Beginn eines Bearbeitungsvorgangs an einem Werkstück 24. Die Bearbeitungswerkzeuge 1 bis 9 liegen in einer ersten räumlichen Abfolge 46 in dem Magazin 32, wobei die erste Abfolge 46 in Bezug auf die Verteilung der Werkzeuge in dem Magazin sehr ungeordnet ist. Das erste Bearbeitungswerkzeug 1 des ersten Satzes ist schon in der Arbeitsspindel 12 eingespannt. Das Werkstück 24 wird mit dem Bearbeitungswerkzeug 1 bearbeitet, was einen ersten Bearbeitungsschritt in der zeitlichen Abfolge der Bearbeitungsschritte darstellt.

Wie schon erwähnt, sind die Bearbeitungswerkzeuge 1 bis 9 weitgehend unsortiert, d.h. "chaotisch", in dem Werkzeugmagazin 32 abgelegt. Es versteht sich allerdings, dass die Steuerung 44 weiß, welches Bearbeitungswerkzeug 20 an welcher Lagerstelle 34 abgelegt ist. Diese Information wird der Steuerung 44 beim Bestücken des Werkzeugmagazins 32 in an sich bekannter Weise mitgeteilt.

Nach Abschluss des Bearbeitungsvorgangs mit dem Bearbeitungswerkzeug 1 legt die Spindel 12 das Bearbeitungswerkzeug 1 an einer definierten ersten Lagerstelle 50 ab. Anschließend werden die Lagerstellen des Kettenmagazins in Richtung des Pfeils 52 soweit verfahren, dass die Spindel das zweite Bearbeitungswerkzeug 2 an der Übergabeposition aufnehmen kann. Diese Situation ist in Fig. 3 dargestellt.

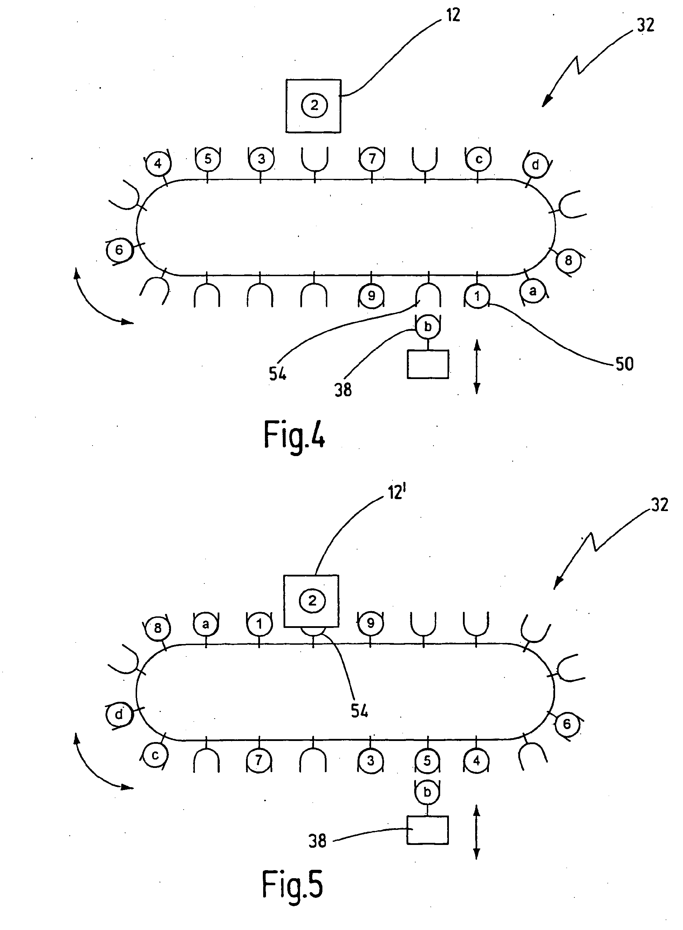

Nachdem die Spindel 12 das Bearbeitungswerkzeug 2 entnommen hat und den Bearbeitungsvorgang an dem Werkstück 24 fortsetzt (oder zeitgleich dazu) wird mit Hilfe des Greifers 38 eine Lagerstelle 54 freigeräumt, die neben der ersten Lagerstelle 50 angeordnet ist (Fig. 4). Anschließend wird das Kettenmagazin 32 so verfahren, dass die freie Lagerstelle 54 an der Übergabeposition zu der Spindel 12 zu liegen kommt. Das Bearbeitungswerkzeug 2 wird nach Abschluss des Bearbeitungsvorgangs an der Lagerstelle 54 abgelegt (in Fig. 5).

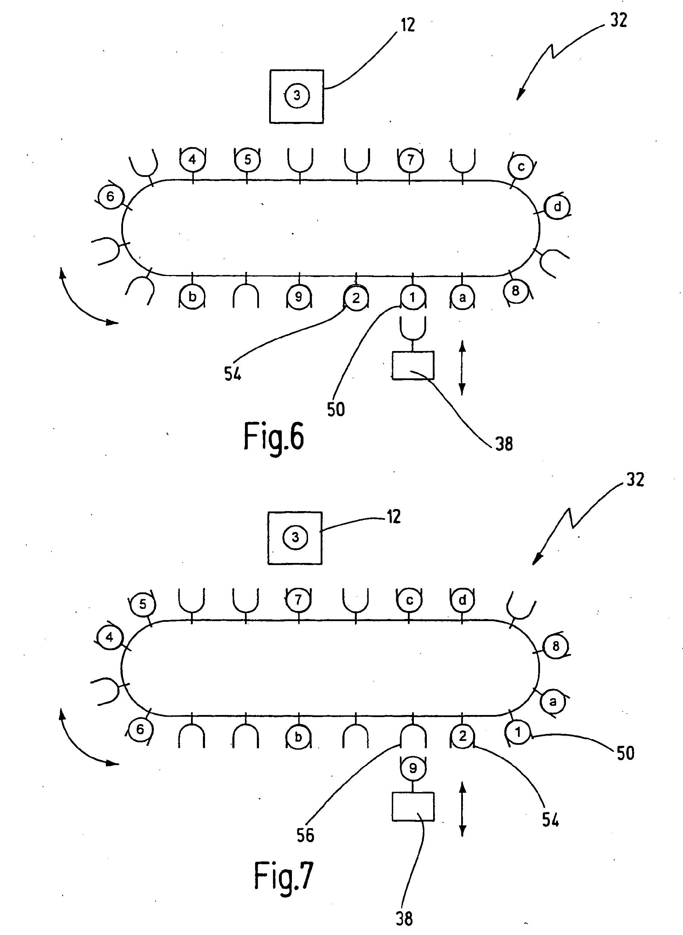

Gemäß Fig. 6 wird das Kettenmagazin 32 anschließend soweit verfahren, dass die Spindel 12 das dritte Bearbeitungswerkzeug in der zeitlichen Abfolge der Bearbeitungswerkzeuge aufnehmen kann. Anschließend wird gemäß Fig. 7 das Kettenmagazin 32 so verfahren, dass die Lagerstelle 56, die neben der Lagerstelle 54 angeordnet ist, mit Hilfe des Greifers 38 freigemacht werden kann.

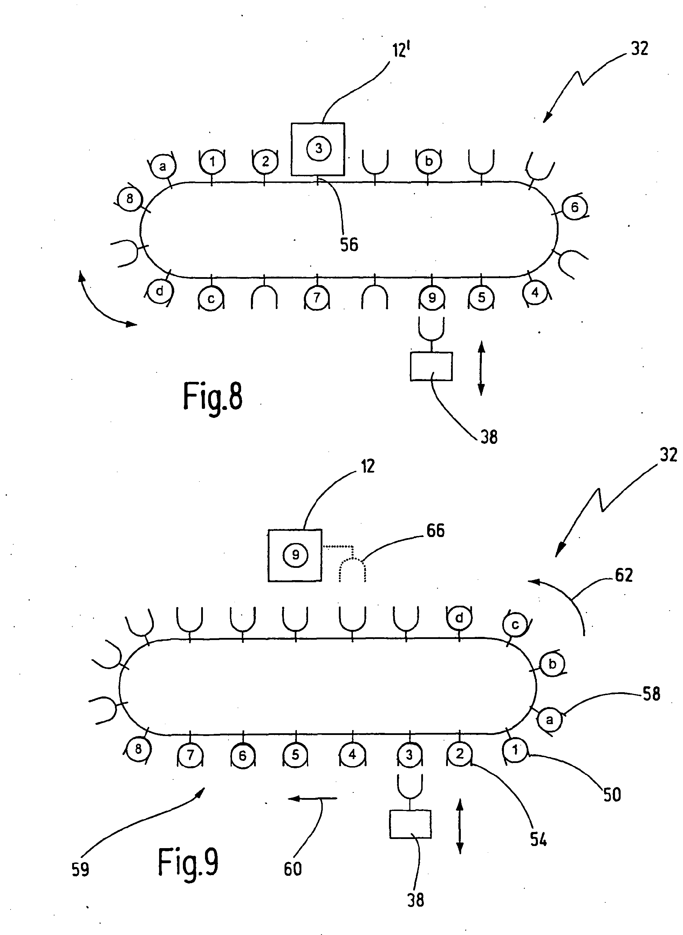

Gemäß Fig. 8 wird das Kettenmagazin 32 anschließend wieder soweit verfahren, dass die freigemachte Lagerstelle 56 an der Übergabeposition zu der Spindel 12 zu liegen kommt. Wenn die Spindel 12 das Bearbeitungswerkzeug 3 an der Lagerstelle 56 ablegt, entspricht die räumliche Position des Bearbeitungswerkzeugs 3 in der räumlichen Abfolge der Bearbeitungswerkzeuge 1, 2, 3 der zeitlichen Abfolge, in der die Bearbeitungswerkzeuge beim Bearbeiten des Werkstücks 24 verwendet werden.

Die anhand der Fig. 2 bis 8 dargestellten Schritte werden während der Bearbeitung des (ersten) Werkstücks 24 entsprechend wiederholt. Wie nachzuvollziehen ist, werden die Werkzeuge des ersten Satzes dabei in einer räumlichen Abfolge 59 sortiert, die der zeitlichen Abfolge der Bearbeitungswerkzeuge entspricht. Nachdem sämtliche Bearbeitungswerkzeuge des ersten Satzes verwendet wurden, liegen die Bearbeitungswerkzeuge 1 bis 9 in dem Werkzeugmagazin 32 in einer Sortierung, die eine schnelle Entnahme der Werkzeuge bei den nachfolgenden Produktionsvorgängen ermöglicht, da das Werkzeugmagazin 32 nur noch mit der Schrittweite der einzelnen Lagerstellen verfahren werden muss. Diese Situation ist in Fig. 9 dargestellt.

Die Sortierung der Bearbeitungswerkzeuge a bis d des zweiten Satzes erfolgt in entsprechender Weise, wenn ein Werkstück 30 in dem zweiten Arbeitsraum 28 erstmals bearbeitet wird. Wie in Fig. 9 dargestellt ist, ist es bevorzugt, wenn das erste Bearbeitungswerkzeug des zweiten Satzes, hier also das Bearbeitungswerkzeug a, an einer ersten Lagerstelle 58 abgelegt wird, die neben der ersten Lagerstelle 50 für das erste Bearbeitungswerkzeug 1 des ersten Satzes liegt. Des Weiteren ist es bevorzugt, wenn die Bearbeitungswerkzeuge a bis d des zweiten Satzes in entgegengesetzter Richtung zu den Bearbeitungswerkzeugen 1 bis 9 des ersten Satzes auf die Lagerstellen 34 verteilt werden, wie dies in Fig. 9 mit den Pfeilen 60 und 62 angedeutet ist. Beispielsweise werden die Lagerstellen in aufsteigender Reihenfolge mit Werkzeugen 1 bis 9 des ersten Satzes belegt, während die Lagerstellen in absteigender Reihenfolge mit den Werkzeugen a bis d des zweiten Satzes belegt werden. In diesem Ausführungsbeispiel lassen sich die Lagerstellen des Werkzeugmagazins 32 weitgehend unabhängig von der Anzahl der Bearbeitungswerkzeuge in den beiden Werkzeugsätzen belegen, vorausgesetzt, dass die Anzahl der im Werkzeugmagazin 32 zur Verfügung stehenden Lagerstellen insgesamt ausreichend ist.

Alternativ zu der Belegung der Lagerstellen gemäß Fig. 9 ist es in anderen Ausführungsbeispielen bevorzugt, die Bearbeitungswerkzeuge 1 bis 9 des ersten Satzes und die Bearbeitungswerkzeuge a bis d des zweiten Satzes ineinander verschachtelt bzw. abwechselnd auf die Lagerstellen zu verteilen. Diese Alternative ist vorteilhaft, wenn auch die Bearbeitung der Werkstücke 24, 30 in den beiden Arbeitsräumen zumindest teilweise überlappend erfolgt.

In den derzeit bevorzugten Ausführungsbeispielen der Erfindung nimmt die Spindel 12 die Bearbeitungswerkzeuge aus den Lagerstellen und legt sie auch dort wieder ab (Pick-up-Verfahren). In einer Abwandlung hiervon, die in Fig. 9 schematisch angedeutet ist, kann das Aufnehmen eines Bearbeitungswerkzeuges aus einer Lagerstelle mit einem separaten Greifer 66 erfolgen, und zwar vorzugsweise zeitgleich mit dem Ablegen eines in der Spindel 12 eingespannten Bearbeitungswerkzeugs. Das Einspannen des neuen Bearbeitungswerkzeugs kann dann mit Hilfe des Greifers 66 erfolgen, während die Spindel 12 in ihre Arbeitsposition zurückfährt.

Wenn ein Bearbeitungswerkzeug, beispielsweise das Bearbeitungswerkzeug 3 aus dem ersten Satz, im Verlauf der Bearbeitung des Werkstücks 24 mehrfach benötigt wird, findet in bevorzugten Ausführungsbeispielen der Erfindung keine erneute Umsortierung statt, um die Anzahl der Umsortierungen des Werkzeugmagazins 32 zu reduzieren. Mit anderen Worten arbeitet die neue Vorrichtung dann gewissermaßen mit einer "virtuellen Festplatzcodierung" der Bearbeitungswerkzeuge, sobald die Bearbeitungswerkzeuge im Verlauf des ersten Produktionsvorgangs einmal sortiert wurden. Um die Span-zu-Span-Zeiten noch weiter zu minimieren, kann man ein mehrfach benötigtes Bearbeitungswerkzeug durch mehrere identische Bearbeitungswerkzeuge ersetzen, die dann dem zeitlichen Ablauf der Bearbeitungsschritte entsprechend in dem Werkzeugmagazin 32 abgelegt werden.

Wenn ein Bearbeitungswerkzeug aufgrund seiner Übergröße mehrere Lagerstellen 34 einnimmt, kann man diesem übergroßen Bearbeitungswerkzeug eine feste Lagerstelle zuordnen, die außerhalb der räumlichen Abfolge der Bearbeitungswerkzeuge liegt. Hierdurch wird der Verwaltungsaufwand und damit das entsprechende Steuerprogramm in der Steuerung 44 vereinfacht. In einem anderen Ausführungsbeispiel werden für ein übergroßes Bearbeitungswerkzeug drei nebeneinander liegende Lagerstellen 34 reserviert, wobei das Bearbeitungswerkzeug in der mittleren der reservierten Lagerstellen abgelegt wird. Dieses Ausführungsbeispiel sortiert das übergroße Bearbeitungswerkzeug also in die räumliche Abfolge der Bearbeitungswerkzeuge ein und ermöglicht somit eine Reduzierung der Span-zu-Span-Zeiten auch für diesen Fall.

Schwesterwerkzeuge, die dazu vorgesehen sind, ein Bearbeitungswerkzeug im Lauf eines Produktionsprozesses zu ersetzen, können an einer beliebigen Lagerstelle abgelegt werden. Sobald das Schwesterwerkzeug erstmalig zur Bearbeitung eines Werkstücks verwendet wird, wird es an derjenigen Lagerstelle abgelegt, die seiner Position in der zeitlichen Abfolge der weiteren Bearbeitungsschritte entspricht. Damit wird das Schwesterwerkzeug automatisch in die räumliche Abfolge der Bearbeitungswerkzeuge einsortiert.

## Patentansprüche

1. Verfahren zum Bearbeiten eines Werkstücks (24, 30), insbesondere zum spanabhebenden Bearbeiten eines metallischen Werkstücks, mit den Schritten:
- Bereitstellen einer Werkzeugmaschine (10) mit einer Werkzeugaufnahme (12) zur Aufnahme eines Bearbeitungswerkzeugs (20),
- Bereitstellen eines Werkzeugmagazins (32) mit einer Vielzahl von Lagerstellen (34), die mit einer Vielzahl von Bearbeitungswerkzeugen (1-9, a-d) in einer ersten räumlichen Abfolge (46) zueinander bestückt sind, und
- Bearbeiten des Werkstücks mit einer definierten zeitlichen Abfolge von Bearbeitungswerkzeugen (1-9, a-d), wobei im Lauf der zeitlichen Abfolge jeweils ein in der Werkzeugaufnahme (12) eingespanntes vorheriges Bearbeitungswerkzeug durch ein nachfolgendes Bearbeitungswerkzeug aus dem Werkzeugmagazin (32) ersetzt wird, und wobei das vorherige Bearbeitungswerkzeug an einer definierten Lagerstelle (54-58) im Werkzeugmagazin (32) abgelegt wird, und wobei die vorherigen Bearbeitungswerkzeuge beim Zurücklegen in das Werkzeugmagazin (32) in einer zweiten räumlichen Abfolge (59) auf die Lagerstellen (34) verteilt werden, die verschieden von der ersten räumlichen Abfolge (46) ist,
**dadurch gekennzeichnet, dass** die zweite räumliche Abfolge (59) zumindest weitgehend der zeitlichen Abfolge entspricht.

2. Verfahren nach Anspruch 1, **dadurch gekennzeichnet, dass** die Bearbeitung des Werkstücks (24, 20) mit einem ersten Bearbeitungswerkzeug (1) beginnt,
wobei das erste Bearbeitungswerkzeug (1) nach der Bearbeitung an einer definierten ersten Lagerstelle (54) im Werkzeugmagazin (32) abgelegt wird, wobei jedes nachfolgende Bearbeitungswerkzeug (2-9) an einer definierten nachfolgenden Lagerstelle (54, 56) abgelegt wird, und wobei die definierten nachfolgenden Lagerstellen (54, 56) in einer auf- oder absteigenden Ordnung an die erste Lagerstelle (50) angereiht sind.

3. Verfahren nach Anspruch 1 oder 2, **dadurch gekennzeichnet, dass** die Lagerstelle (50) für das vorherige Bearbeitungswerkzeug (1), sofern erforderlich, mit einem automatisierten Greifer (38) freigemacht wird, während das Werkstück (24, 30) mit dem vorherigen Bearbeitungswerkzeug (1) bearbeitet wird.

4. Verfahren nach einem der Ansprüche 1 bis 3, **dadurch gekennzeichnet, dass** die Werkzeugaufnahme (12) das vorherige Bearbeitungswerkzeug direkt an seiner Lagerstelle (34) ablegt.

5. Verfahren nach einem der Ansprüche 1 bis 4, **dadurch gekennzeichnet, dass** die Werkzeugaufnahme (12) das nachfolgende Bearbeitungswerkzeug direkt aus seiner Lagerstelle (34) entnimmt.

6. Verfahren nach einem der Ansprüche 1 bis 5, **dadurch gekennzeichnet, dass** die Werkzeugmaschine (10) zumindest zwei Arbeitsräume (26, 28) aufweist, in denen Werkstücke (24, 30) bearbeitet werden, wobei für jeden Arbeitsraum (26, 28) ein eigener Satz an Bearbeitungswerkzeugen (1-9, a-d) in dem Werkzeugmagazin (32) bereitgestellt wird.

7. Verfahren nach Anspruch 6, **dadurch gekennzeichnet, dass** ein erster Satz (1-9) von Bearbeitungswerkzeugen beim Zurücklegen in das Werkzeugmagazin (32) in der zweiten räumlichen Abfolge auf die Lagerstellen verteilt wird, und dass ein zweiter Satz (a-d) von Bearbeitungswerkzeugen beim Zurücklegen in das Werkzeugmagazin (32) in einer dritten räumlichen Abfolge auf die Lagerstellen verteilt wird, wobei die zweite und die dritte Abfolge die Lagerstellen (34) gegenläufig belegen.

8. Verfahren nach Anspruch 7, **dadurch gekennzeichnet, dass** die zweite und die dritte Abfolge an benachbarten Lagerstellen (50, 58) beginnen.

9. Verfahren nach einem der Ansprüche 1 bis 8, **dadurch gekennzeichnet, dass** das Werkzeugmagazin (32) ein Kettenmagazin mit einer umlaufenden Kette ist, an der die Lagerstellen (34) angeordnet sind.

10. Vorrichtung zum Bearbeiten eines Werkstücks, insbesondere zum spanabhebenden Bearbeiten eines metallischen Werkstücks (24, 30), mit einer Werkzeugaufnahme zur Aufnahme eines Bearbeitungswerkzeugs (20), und mit einem Werkzeugmagazin (32) mit einer Vielzahl von Lagerstellen (34), die mit einer Vielzahl von Bearbeitungswerkzeugen (20) in einer ersten räumlichen Abfolge zueinander bestückbar sind, ferner mit einer Steuerung (44), die dazu ausgebildet ist, die Bearbeitung eines Werkstücks (24,30) mit einer definierten zeitlichen Abfolge von Bearbeitungswerkzeugen aus dem Werkzeugmagazin (32) zu steuern, wobei im Lauf der zeitlichen Abfolge jeweils ein in der Werkzeugaufnahme (12) eingespanntes vorheriges Bearbeitungswerkzeug durch ein nachfolgendes Bearbeitungswerkzeug aus dem Werkzeugmagazin (32) ersetzt wird, und wobei das vorherige Bearbeitungswerkzeug an einer definierten Lagerstelle (34) im Werkzeugmagazin abgelegt wird, wobei die Steuerung (44) dazu ausgebildet ist, die vorherigen Bearbeitungswerkzeuge beim Zurücklegen in das Werkzeugmagazin (32) in einer zweiten räumlichen Abfolge auf die Lagerstellen (34) zu verteilen, die verschieden von der ersten räumlichen Abfolge ist, **dadurch gekennzeichnet, dass** die Steuerung (44) dazu ausgebildet ist, die bisherigen Bearbeitungswerkzeuge beim Zurücklegen in das Werkzeugmagazin (32) in einer zweiten räumlichen Abfolge auf die Lagerstellen (34) zu verteilen; die zumindest zumindest weitgehend der zeitlichen Abfolge entspricht.

## Claims

1. A method for machining a workpiece (24, 30), in particular for metal cutting machining of a metallic workpiece, comprising the steps:
- providing a machine tool (10) having a tool receptacle (12) for accommodating a cutting tool (20),
- providing a tool magazine (32) having a plurality of storage places (34) which are loaded with a plurality of cutting tools (1-9, a-d) in a first spatial sequence (46), and
- machining the workpiece using cutting tools (1-9, a-d) in a predefined time sequence, with a previous cutting tool accommodated in the tool receptacle (12) in each case being replaced by a following cutting tool from the tool magazine (32) in the course of the time sequence, and the previous cutting tool being deposited at a defined storage place (54-58) in the tool magazine (32), whereby the previous cutting tools, when being placed back into the tool magazine (32), are distributed to the storage places (34) in a second spatial sequence (59), the second spatial sequence (59) being different from the first spatial sequence (46), **characterized in that** the second spatial sequence (59) corresponds at least largely to the time sequence.

2. The method according to Claim 1, **characterized in that** the machining of the workpiece (24, 20) starts with a first cutting tool (1), the first cutting tool (1) being deposited at a defined first storage place (50) in the tool magazine (32) after the machining, every following cutting tool (2-9) being deposited at a defined following storage place (54, 56), and the defined following storage spaces being joined to the first storage place (50) in an ascending or descending order.

3. The method according to Claim 1 or 2, **characterized in that** the storage place (50) for the previous cutting tool (1), if necessary, is cleared using an automated gripper (38), while the workpiece (24, 30) is being machined with the previous cutting tool (1).

4. The method according to anyone of Claims 1 to 3, **characterized in that** the tool receptacle (12) deposits the previous cutting tool directly at its storage place (34).

5. The method according to anyone of Claims 1 to 4, **characterized in that** the tool receptacle (12) picks up the following cutting tool directly from its storage place (34).

6. The method according to anyone of Claims 1 to 5, **characterized in that** the machine tool (10) has at least two working areas (26, 28) for machining workpieces (24, 30), with a separate set of cutting tools (1-9, a-d) being provided in the tool magazine (32) for each working area (26, 28).

7. The method according to Claim 6, **characterized in that** a first set (1-9) of cutting tools, when being put back into the tool magazine (32), is distributed to the storage places in the second spatial sequence, and a second set (a-d) of cutting tools, when being put back into the tool magazine (32), is distributed to the storage places in a third spatial sequence, with the second and the third sequences occupying the storage places (34) in opposite directions.

8. The method according to Claim 7, **characterized in that** the second and the third sequence start at adjacent storage places (50, 58).

9. The method according to anyone of Claims 1 to 8, **characterized in that** the tool magazine (32) is a chain magazine having a revolving chain, on which the storage places (34) are arranged.

10. An apparatus for machining a workpiece, in particular for metal cutting machining of a metallic workpiece (24, 30), comprising a tool receptacle for accommodating a cutting tool (20), and comprising a tool magazine (32) having a plurality of storage places (34) which can be loaded with a plurality of cutting tools (20) in a first spatial sequence, further comprising a controller (44) designed for controlling the machining of a workpiece (24, 30) with a predefined time sequence of cutting tools from the tool magazine (32), wherein, in the course of the time sequence, a previous cutting tool accommodated in the tool receptacle (12) is replaced in each case by a following cutting tool from the tool magazine (32), and wherein the previous cutting tool is deposited at a defined storage place (34) in the tool magazine, whereby the controller (44) is designed for distributing the previous cutting tools to the storage places (34) in a second spatial sequence when they are being placed back into the tool magazine (32), with the second spatial sequence being different from the first spatial sequence, **characterized in that** the controller (44) is designed for distributing the previous cutting tools to the storage places (34) in a second spatial sequence when they are being placed back into the tool magazine (32), which second spatial sequence corresponds at least largely to the time sequence

## Revendications

1. Procédé d'usinage d'une pièce à usiner (24, 30), en particulier d'usinage par enlèvement de matière d'une pièce à usiner métallique, présentant les étapes suivantes consistant à :
- mettre à disposition une machine-outil (10) avec un logement d'outil (12) pour le logement d'un outil d'usinage (20),
- mettre à disposition un magasin d'outils (32) avec une pluralité d'emplacements de stockage (34) qui sont garnis d'une pluralité d'outils d'usinage (1-9, a-d) dans une première suite (46) spatiale les uns par rapport aux autres, et
- usiner la pièce à usiner avec une suite temporelle définie d'outils d'usinage (1-9, a-d), au cours de la suite temporelle, à chaque fois un outil d'usinage précédent serré dans le logement d'outil (12) étant remplacé par un outil d'usinage suivant provenant du magasin d'outils (32), et l'outil d'usinage précédent étant déposé sur un emplacement de stockage (54-58) défini dans le magasin d'outils (32), et les outils d'usinage précédents étant répartis lors du replacement dans le magasin d'outils (32) dans une seconde suite (59) spatiale sur les emplacements de stockage (34), laquelle est différente de la première suite (46) spatiale,
**caractérisé en ce que** la seconde suite spatiale (59) correspond au moins largement à la suite temporelle.

2. Procédé selon la revendication 1, **caractérisé en ce que** l'usinage de la pièce à usiner (24, 20) commence par un premier outil d'usinage (1), le premier outil d'usinage (1) étant déposé après l'usinage sur un premier emplacement de stockage défini (54) dans le magasin d'outils (32), chaque outil d'usinage (2-9) suivant étant déposé sur un emplacement de stockage (54, 56) suivant défini, et les emplacements de stockage (54, 56) suivants définis étant ajoutés dans un ordre croissant ou décroissant au premier emplacement de stockage (50).

3. Procédé selon la revendication 1 ou 2, **caractérisé en ce que** l'emplacement de stockage (50) pour l'outil d'usinage (1) précédent, dans la mesure où nécessaire, est libéré avec une griffe (38) automatisée, pendant que la pièce à usiner (24, 30) est usinée avec l'outil d'usinage (1) précédent.

4. Procédé selon l'une des revendications 1 à 3, **caractérisé en ce que** le logement d'outil (12) dépose l'outil d'usinage précédent directement son emplacement de stockage (34).

5. Procédé selon l'une des revendications 1 à 4, **caractérisé en ce que** le logement d'outil (12) retire l'outil d'usinage suivant directement de son emplacement de stockage (34).

6. Procédé selon l'une des revendications 1 à 5, **caractérisé en ce que** la machine-outil (10) présente au moins deux espaces de travail (26, 28), dans lesquels des pièces à usiner (24, 30) sont usinées, pour chaque espace de travail (26, 28) étant mis à disposition un propre jeu d'outils d'usinage (1-9, a-d) dans le magasin d'outils (32).

7. Procédé selon la revendication 6, **caractérisé en ce qu'**un premier jeu (1-9) d'outils d'usinage est réparti lors du replacement dans le magasin d'outils (32) dans la deuxième suite spatiale sur les emplacements de stockage et **en ce qu'**un second jeu (a-d) d'outils d'usinage est réparti lors du replacement dans le magasin d'outils (32) dans une troisième suite spatiale sur les emplacements de stockage, la deuxième et la troisième suites garnissant en sens contraires les emplacements de stockage (34).

8. Procédé selon la revendication 7, **caractérisé en ce que** la deuxième et la troisième suites commencent sur des emplacements de stockage (50, 58) contigus.

9. Procédé selon l'une des revendications 1 à 8, **caractérisé en ce que** le magasin d'outils (32) est un magasin à chaîne avec une chaîne rotative sur laquelle sont disposés les emplacements de stockage (34).

10. Dispositif d'usinage d'une pièce à usiner, en particulier d'usinage par enlèvement de matière d'une pièce à usiner (24, 30) métallique, avec un logement d'outils pour le logement d'un outil d'usinage (20), et avec un magasin d'outils (32) avec une pluralité d'emplacements de stockage (34) qui peuvent être garnis d'une pluralité d'outils d'usinage (20) dans une première suite spatiale les uns par rapport aux autres, de plus avec une commande (44) qui est réalisée afin de commander l'usinage d'une pièce à usiner (24, 30) avec une suite temporelle définie d'outils d'usinage provenant du magasin d'outils (32), au cours de la suite temporelle, à chaque fois un outil d'usinage précédent serré dans le logement d'outils (12) étant remplacé par un outil d'usinage suivant du magasin d'outils (32), et l'outil d'usinage précédent étant déposé à un emplacement de stockage (34) défini dans le magasin d'outils, la commande (44) étant réalisée de manière à répartir les outils d'usinage précédents lors du replacement dans le magasin d'outils (32) dans une deuxième suite spatiale sur les emplacements de stockage (34), laquelle est différente de la première suite spatiale, **caractérisé en ce que** la commande (44) est réalisée de manière à de répartir les outils d'usinage antérieurs lors du replacement dans le magasin d'outils (32) dans une seconde suite spatiale sur les emplacements de stockage (34), laquelle correspond au moins largement à la suite temporelle.
